# EUROPÄISCHE PATENTSCHRIFT

(11) **EP 4 077 040 B1**
(45) Veröffentlichungstag und Bekanntmachung des Hinweises auf die Patenterteilung: **22.05.2024**
(21) Anmeldenummer: 20820806.6
(22) Anmeldetag: 03.12.2020
(51) Int. Cl.: B60N 2/02, B60N 2/30, B60R 25/24

(54) **VORRICHTUNG UND VERFAHREN ZUM BETRIEB EINER AUS ODER IN EINEM FAHRZEUG AUSKLAPPBAREN SITZANORDNUNG**
DEVICE AND METHOD FOR THE OPERATION OF A SEATING ARRANGEMENT, FOLDABLE OUT IN OR OUT OF A VEHICLE
DISPOSITIF ET PROCÉDÉ POUR FAIRE FONCTIONNER UN AGENCEMENT DE SIÈGE, DÉPLIABLE DANS OU À PARTIR D'UN VÉHICULE

(30) Priorität: 19.12.2019 DE 102019008843
(43) Veröffentlichungstag der Anmeldung: 26.10.2022
(73) Patentinhaber: Mercedes-Benz Group AG, 70372 Stuttgart (DE)
(72) Erfinder: PETERS, Steven, 71701 Schwieberdingen (DE)
(74) Vertreter: Novagraaf Group
(86) Internationale Anmeldenummer: PCT/EP2020/084391
(87) Internationale Veröffentlichungsnummer: WO 2021/122018

(56) Entgegenhaltungen:
- DE-A1-102016 218 071
- US-A- 1 751 378
- US-A- 4 139 232

## Beschreibung

Die Erfindung betrifft eine Vorrichtung zum Betrieb einer aus oder in einem Fahrzeug ausklappbaren Sitzanordnung.

Die Erfindung betrifft weiterhin ein Verfahren zum Betrieb einer aus oder in einem Fahrzeug ausklappbaren Sitzanordnung.

Die Erfindung betrifft ferner ein Fahrzeug.

Aus der EP 2 033 839 A1 ist ein ausklappbarer Sitz für Kraftfahrzeuge bekannt, welche mit einem Doppelboden in einem Kofferraum und einer Ladekante versehen sind. Der Doppelboden des Kofferraums ist in einem im hinteren Bereich aus dem Kofferraum herausklappbar und stützt sich nach dem Herausklappen an der Ladekante. Auf einer im ausgeklappten Zustand nach oben gerichteten Seite des Doppelbodens ist eine gepolsterte Sitzfläche ausgebildet.

Weiterhin ist aus der DE 10 2016 218 071 A1 ein Authentifikationssystem für ein Kraftfahrzeug bekannt, welches ein Zugangsmodul umfasst, das Zugangsberechtigungsdaten von einem externen Gerät empfangen und verifizieren und eine Türschlossverriegelung für das Kraftfahrzeug steuern kann. Das Authentifikationssystem umfasst weiterhin ein Fahrberechtigungsmodul, welches Fahrberechtigungsdaten von dem externen Gerät empfangen und verifizieren kann, wobei das Fahrberechtigungsmodul eine Fahrberechtigung für das Kraftfahrzeug steuern kann. Die Fahrberechtigungsdaten sind kraftfahrzeugseitig festgelegt und durch eine Ausgabeeinheit im Kraftfahrzeuginneren ausgebbar.

Die US 4 139 232 A beschreibt ein Fahrzeug mit einem herunterklappbaren Notsitzsystem, welches in eine Öffnung in einem Kofferraumdeckel des Fahrzeugs passt. Die Öffnung hat einen Rand, in den unter Ausbildung einer wasserdichten Abdichtung ein Rahmen eingreift. Der Rahmen wird durch den Kofferraumdeckel getragen und trägt seinerseits Lagermittel, die darunter in einen Hohlraum des Kofferraums hängen. Ein Scharniermittel ist drehbar an den Lagermitteln und ein Stützelement ist an dem Scharniermittel montiert. Das Stützelement ist ausgebildet, eine geschlossene Position einzunehmen, in welcher es die Öffnung schließt. Weiterhin ist das Stützelement ausgebildet, eine aufrechte Rückenlehnenposition einzunehmen, in welcher es die Öffnung geöffnet lässt und relativ zu dem Rahmen kippbar ist, um eine Rückenlehne zu bilden. Das Scharniermittel ist ausgebildet, eine parallelogrammartige Bewegung auszuführen, um notwendige Winkeländerungen einer Position des Stützelements bereitzustellen.

Die US 1 751 378 A beschreibt ein Fahrzeug mit einer Öffnung in einem Heckbereich und einem klappbaren Sitz, welcher im eingeklappten Zustand unterhalb der Öffnung angeordnet ist.

Der Erfindung liegt die Aufgabe zu Grunde, eine neuartige Vorrichtung sowie ein neuartiges Verfahren zum Betrieb einer aus oder in einem Fahrzeug ausklappbaren Sitzanordnung und ein gegenüber dem Stand der Technik verbessertes Fahrzeug anzugeben.

Die Aufgabe wird erfindungsgemäß gelöst mit einer Vorrichtung, welche die im Anspruch 1 angegebenen Merkmale aufweist, mit einem Verfahren, welches die im Anspruch 4 angegebenen Merkmale aufweist und mit einem Fahrzeug, welches die im Anspruch 8 angegebenen Merkmale aufweist.

Vorteilhafte Ausgestaltungen der Erfindung sind Gegenstand der abhängigen Ansprüche.

Die Vorrichtung zum Betrieb einer aus oder in einem Fahrzeug ausklappbaren Sitzanordnung umfasst eine Steuereinheit, welche ausgebildet ist, einen Aktivierungsbefehl von einem autorisierten Fahrzeugnutzer und dritten Personen zum Ausklappen der Sitzanordnung aus einem fahrzeuginneren Bereich in einen von außerhalb des Fahrzeugs zugänglichen Bereich zu empfangen und auszuführen.

Erfindungsgemäß ist eine Freigabe einer Ausklappfunktion der Sitzanordnung durch einen autorisierten Fahrzeugnutzer nur dann aktivierbar, wenn mittels einer Kamera erfasst wird und/oder der autorisierte Fahrzeugnutzer bestätigt, dass ein Kofferraum, in welchem sich die Sitzanordnung im eingeklappten Zustand befindet, frei von anderen Gegenständen ist.

Die Vorrichtung ermöglicht ein Zuverfügungstellen einer komfortablen Sitzmöglichkeit, beispielsweise zum Wechsel von Schuhen und/oder zu einer Erholung, auch für dritte Personen, welche keine autorisierten Fahrzeugnutzer sind. Dabei ist eine Gefahr eines Diebstahls von Gegenständen aus dem Kofferraum verringert.

In einer möglichen Ausgestaltung der Vorrichtung umfasst diese zumindest einen elektronischen Fahrzeugschlüssel, umfassend eine Funktion zur Freigabe einer Bedienung der Sitzanordnung durch dritte Personen, und/oder zumindest ein mobiles Endgerät, umfassend ein Anwendungsprogramm zur Freigabe einer Bedienung der Sitzanordnung durch dritte Personen. Hierdurch ist eine einfache, komfortable und sichere Freigabe durch den Fahrzeugnutzer möglich.

In einer weiteren möglichen Ausgestaltung der Vorrichtung umfasst diese zumindest ein mobiles Endgerät, umfassend ein Anwendungsprogramm zur Bedienung der Sitzanordnung durch dritte Personen. Hierdurch ist eine einfache, komfortable und sichere Bedienung durch die dritte Person möglich.

In dem Verfahren zum Betrieb einer aus oder in einem Fahrzeug ausklappbaren Sitzanordnung wird nach einer entsprechenden Freigabe von einem autorisierten Fahrzeugnutzer eine Ausklappfunktion der Sitzanordnung aus einem fahrzeuginneren Bereich in einen von außerhalb des Fahrzeugs zugänglichen Bereich für dritte Personen freigegeben.

Das Verfahren ermöglicht ein Zuverfügungstellen einer komfortablen Sitzmöglichkeit, beispielsweise zum Wechsel von Schuhen und/oder zu einer Erholung, auch für dritte Personen, welche keine autorisierten Fahrzeugnutzer sind.

Dabei wird die Freigabe nur dann aktiviert oder ist aktivierbar, wenn mittels einer Kamera erfasst wird und/oder der autorisierte Fahrzeugnutzer bestätigt, dass ein Kofferraum, in welchem sich die Sitzanordnung im eingeklappten Zustand befindet, frei von anderen Gegenständen ist. Somit kann eine Gefahr eines Diebstahls von Gegenständen aus dem Kofferraum verringert werden.

In einer möglichen Ausgestaltung des Verfahrens werden mittels eines Anwendungsprogramms auf zumindest einem mobilen Endgerät zumindest einer dritten Person Standorte von Fahrzeugen, welche über eine mittels des Anwendungsprogramms von dritten Personen bedienbare und betriebsbereite ausklappbare Sitzanordnung umfassen, ausgegeben. Somit können dritte Personen in einfacher Weise Fahrzeuge auffinden, welche die Funktion einer ausklappbaren Sitzanordnung für dritte Personen anbieten.

In einer weiteren möglichen Ausgestaltung des Verfahrens wird jede durch eine dritte Person durchgeführte Bedienung der Sitzanordnung gemeinsam mit einer zugehörigen, zum Zeitpunkt der Bedienung vorliegenden geografischen Position des Fahrzeugs in einer zentralen Speichereinheit gespeichert. Somit ist bei Beschädigungen, Vandalismus und/oder Diebstahl von Objekten aus dem Fahrzeug eine Rückverfolgbarkeit sichergestellt.

In einer weiteren möglichen Ausgestaltung des Verfahrens wird bei einer Entfernung der dritten Person aus einem vorgegebenen Umkreis um das Fahrzeug ohne vorheriges Einklappen der Sitzanordnung mittels des Anwendungsprogramms ein Alarm auf dem mobilen Endgerät der dritten Person ausgegeben und bei einer ausbleibenden Reaktion der dritten Person wird die Sitzanordnung automatisch eingeklappt. Dies stellt sicher, dass die Sitzanordnung nach ihrer Benutzung stets wieder eingeklappt und das Fahrzeug verschlossen wird. Eine geografische Position der dritten Person wird hierbei beispielsweise anhand eines mobilen Endgeräts, auf welchem das Anwendungsprogramm ausgeführt wird, ermittelt. Eine geografische Position des Fahrzeugs wird beispielsweise anhand eines fahrzeugeigenen Positionsbestimmungssensors, beispielsweise eines so genannten GPS-Sensors, ermittelt.

Ein erfindungsgemäßes Fahrzeug mit einer ausklappbaren Sitzanordnung umfasst eine zuvor beschriebene Vorrichtung zum Betrieb der Sitzanordnung. Das Fahrzeug ermöglicht ein Zuverfügungstellen einer komfortablen Sitzmöglichkeit, beispielsweise zum Wechsel von Schuhen und/oder zu einer Erholung, auch für dritte Personen, welche keine autorisierten Fahrzeugnutzer sind. Da geparkte Fahrzeuge oftmals wertvolle Fläche, beispielsweise in einer Innenstadt, beanspruchen, kann durch das Anbieten einer bequemen und gegebenenfalls unter einem geöffneten Kofferraumdeckel befindlichen schattigen Sitzgelegenheit für dritte Personen ein adäquater Gegen- und/oder Mehrwert erzeugt werden.

In einer möglichen Ausgestaltung des Fahrzeugs, insbesondere einer Limousine, ist die Sitzanordnung aus oder in einem Kofferraum ausklappbar. Dabei umfasst die Sitzanordnung zumindest ein Lehnenelement und zumindest ein an dem Lehnenelement angeordnetes Sitzelement. Das zumindest eine Lehnenelement verläuft in einem eingeklappten Zustand der Sitzanordnung zumindest im Wesentlichen parallel zu und unterhalb einer den Kofferraum an einer Oberseite begrenzenden Innenwand. Das zumindest eine Sitzelement verläuft im eingeklappten Zustand der Sitzanordnung zumindest im Wesentlichen parallel zu einer den Kofferraum zu einer Fahrgastzelle abgrenzenden Innenwand. Das zumindest eine Lehnenelement und das zumindest eine Sitzelement sind aus dem eingeklappten Zustand in einen ausgeklappten Zustand schwenkbar, wobei das zumindest eine Lehnenelement in dem ausgeklappten Zustand zumindest im Wesentlichen parallel zu einer Fahrzeughochachse innerhalb des Kofferraums verläuft und das zumindest eine Sitzelement im ausgeklappten Zustand ausgehend von einem unteren Ende des ausgeklappten Lehnenelements zumindest bis zu einer Ladekante des Kofferraums zumindest im Wesentlichen senkrecht zur Fahrzeughochachse verläuft.

Das Fahrzeug zeichnet sich aufgrund dieser Anordnung der Sitzanordnung im eingeklappten Zustand durch ein besonders großes verbleibendes Volumen des Kofferraums und eine gute Nutzbarkeit desselben aus. Weiterhin kann mittels des Fahrzeugs ein Zuverfügungstellen einer komfortablen Sitzmöglichkeit, beispielsweise zum Wechsel von Schuhen und/oder zu einer Erholung, realisiert werden.

Ausführungsbeispiele der Erfindung werden im Folgenden anhand von Zeichnungen näher erläutert.

Dabei zeigen:
- Fig. 1: schematisch ein Blockschaltbild einer Vorrichtung zum Betrieb einer aus oder in einem Fahrzeug ausklappbaren Sitzanordnung,
- Fig. 2: schematisch eine halbtransparente Seitenansicht eines Ausschnitts eines Fahrzeugs mit einer in dem Fahrzeug ausklappbaren Sitzanordnung in einer ersten Position,
- Fig. 3: schematisch eine halbtransparente Seitenansicht eines Ausschnitts eines Fahrzeugs mit einer in dem Fahrzeug ausklappbaren Sitzanordnung in einer zweiten Position und
- Fig. 4: schematisch eine halbtransparente Seitenansicht eines Ausschnitts eines Fahrzeugs mit einer in dem Fahrzeug ausklappbaren Sitzanordnung in einer dritten Position.

Einander entsprechende Teile sind in allen Figuren mit den gleichen Bezugszeichen versehen.

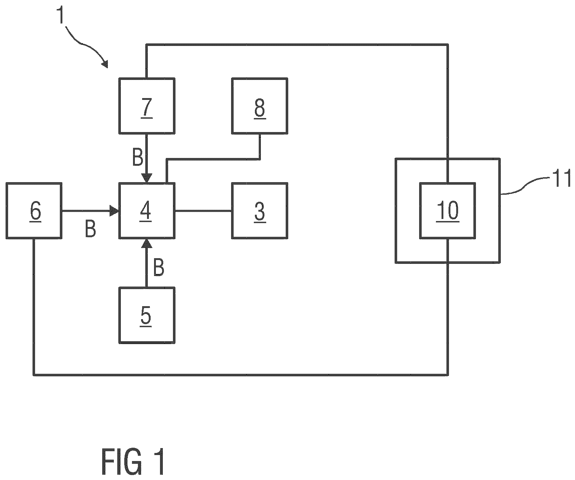

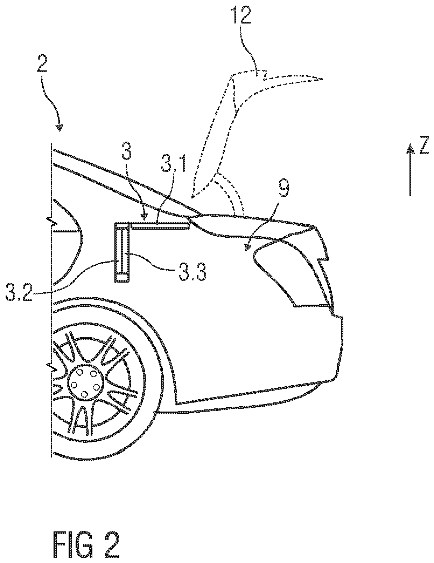

In Figur 1 ist ein Blockschaltbild eines möglichen Ausführungsbeispiels einer Vorrichtung 1 zum Betrieb einer aus oder in einem in den Figuren 2 bis 4 gezeigten Fahrzeug 2 ausklappbaren Sitzanordnung 3 dargestellt.

Die Sitzanordnung 3 ist insbesondere derart ausgebildet, dass diese nach einer Aktivierung automatisch und motorisch aus einer eingeklappten Position in eine ausgeklappte Stellung überführt wird.

Dabei bildet die Sitzanordnung 3 im ausgeklappten Zustand eine komfortable Sitzgelegenheit, zum Beispiel zum Wechsel von Schuhen und/oder als Entspannungsmöglichkeit für einen Fahrzeugnutzer. Zusätzlich wird diese Funktion auch für dritte Personen, beispielsweise Passanten, zur Verfügung gestellt.

Hierzu umfasst die Vorrichtung 1 eine Steuereinheit 4, welche ausgebildet ist, einen Aktivierungsbefehl B von einem autorisierten Fahrzeugnutzer und dritten Personen zum Ausklappen der Sitzanordnung 3 aus einem fahrzeuginneren Bereich in einen von außerhalb des Fahrzeugs 2 zugänglichen Bereich zu empfangen und auszuführen.

Den Aktivierungsbefehl B kann der autorisierte Fahrzeugnutzer beispielsweise mittels eines elektronischen Fahrzeugschlüssels 5 oder mittels eines Anwendungsprogramms eines mobilen Endgeräts 6, beispielsweise eines Smartphones oder so genannten Wearables, auslösen.

Die dritte Person kann ebenfalls den Aktivierungsbefehl B mittels eines Anwendungsprogramms eines mobilen Endgeräts 7, beispielsweise eines Smartphones oder so genannten Wearables, auslösen.

Das heißt, die Bedienung erfolgt durch den autorisierten Fahrzeugnutzer mittels seines Fahrzeugschlüssels 5 oder mittels seines mobilen Endgeräts 6, wobei der autorisierte Fahrzeugnutzer beispielsweise in dem Anwendungsprogramm des mobilen Endgeräts 6 aber auch lokal im Fahrzeug 2 selbst vorgeben kann, ob er eine Nutzung der Sitzanordnung 3 durch dritte Personen zulässt. Ist dies nicht der Fall, bleibt das Fahrzeug 2 verriegelt. Weiterhin ist die Freigabe durch den Nutzer nur dann aktiviert oder aktivierbar, wenn mittels einer Kamera 8 erfasst wird, dass ein in den Figuren 2 bis 4 näher dargestellter Kofferraum 9 des Fahrzeugs 2, in welchem sich die Fahrzeugsitzanordnung 3 im eingeklappten Zustand befindet, frei von anderen Gegenständen, beispielsweise vom autorisierten Fahrzeugnutzer vergessenen Objekten, ist. Alternativ oder zusätzlich kann auch durch den autorisierten Fahrzeugnutzer, beispielsweise über das Anwendungsprogramm des mobilen Endgeräts 6, eine Bestätigung erfolgen, dass der Kofferraum 9 frei von Gegenständen ist. Liegt keine Bestätigung vor, dass der Kofferraum 9 frei von Gegenständen ist, bleibt das Fahrzeug 2 verriegelt.

Die dritte Person kann mittels des Anwendungsprogramms des mobilen Endgeräts 7 beispielsweise ein Öffnen des Kofferraums 9 des geparkten Fahrzeugs 2 und eine Bedienung, insbesondere das Ein- und Ausklappen der Sitzanordnung 3, steuern. Dabei ist sichergestellt, dass dies nur durch registrierte Benutzer, beispielsweise mit einem Account in dem Anwendungsprogramm inklusive validierten Adressdaten, durchführbar ist, während diese in dem Anwendungsprogramm eingeloggt sind.

Auch werden in einer möglichen Ausgestaltung mittels des Anwendungsprogramms auf dem mobilen Endgerät 7 Standorte von Fahrzeugen 2, welche über eine mittels des Anwendungsprogramms von dritten Personen bedienbare und betriebsbereite ausklappbare Fahrzeugsitzanordnung 3 umfassen, ausgegeben. Diese Ausgabe erfolgt beispielsweise in einer Kartendarstellung.

Weiterhin wird in einer möglichen Ausgestaltung jede durch eine dritte Person durchgeführte Bedienung der Fahrzeugsitzanordnung 3 gemeinsam mit einer zugehörigen, zum Zeitpunkt der Bedienung vorliegenden geografischen Position des Fahrzeugs 2 in einer zentralen Speichereinheit 10, welche Bestandteil einer zentralen Datenverarbeitungseinheit 11, beispielsweise eines so genannten Backendservers ist, gespeichert.

Weiterhin ist in einer möglichen Ausgestaltung vorgesehen, dass bei einer Entfernung der dritten Person aus einem vorgegebenen Umkreis um das Fahrzeug 2 ohne vorheriges Einklappen der Fahrzeugsitzanordnung 3 mittels des Anwendungsprogramms ein Alarm auf dem mobilen Endgerät 7 der dritten Person ausgegeben wird und bei einer ausbleibenden Reaktion der dritten Person die Fahrzeugsitzanordnung 3 automatisch wieder eingeklappt wird.

Die Figuren 2 bis 4 zeigen eine halbtransparente Seitenansicht eines Ausschnitts eines Fahrzeugs 2 mit einer in dem Fahrzeug 2 ausklappbaren Sitzanordnung 3 in unterschiedlichen Positionen.

Das Fahrzeug 2 ist als Limousine ausgebildet und die Sitzanordnung 3 ist in einem Kofferraum 9 des Fahrzeugs 2 angeordnet und innerhalb desselben aus einer eingeklappten Position in einer ausgeklappten Position überführbar.

Die Sitzanordnung 3 umfasst ein Lehnenelement 3.1 und zwei an dem Lehnenelement 3.1 angeordnete Sitzelemente 3.2, 3.3. Ein erstes Sitzelement 3.2 ist dabei fest an dem Lehnenelement 3.1 und ein zweites Sitzelement 3.3 schwenkbar an dem ersten Sitzelement 3.2 angeordnet.

Im in Figur 2 dargestellten eingeklappten Zustand der Sitzanordnung 3 ist das Lehnenelement 3.1 zumindest im Wesentlichen parallel zu und unterhalb einer nicht näher dargestellten, den Kofferraum 9 an einer Oberseite begrenzenden Innenwand angeordnet. Die Sitzelemente 3.2, 3.3 sind im eingeklappten Zustand der Sitzanordnung 3 aneinander geklappt und verlaufen im Wesentlichen senkrecht zum Lehnenelement 3.1 und parallel zu einer nicht näher dargestellten, den Kofferraum 9 zu einer Fahrgastzelle abgrenzenden Innenwand.

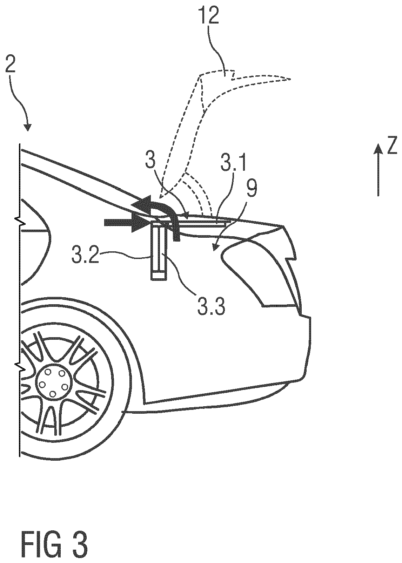

Zu einem Ausklappen der Sitzanordnung 3 wird ein Kofferraumdeckel 12 automatisch geöffnet und das Lehnenelement 3.1 wird, wie in Figur 3 dargestellt, gemeinsam mit den Sitzelementen 3.2, 3.3 automatisch in Richtung eines Fahrzeughecks verschoben.

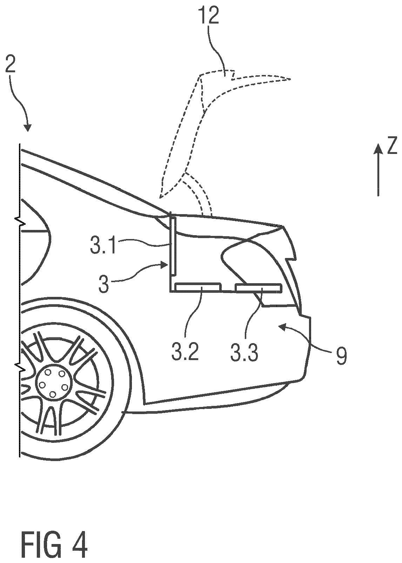

Abschließend werden das Lehnenelement 3.1 und das zweite Sitzelement 3.3 derart nach unten in einen ausgeklappten Zustand geschwenkt, dass die Sitzanordnung 3 gemäß der Darstellung in Figur 4 angeordnet ist. Dabei verläuft das Lehnenelement 3.1 im ausgeklappten Zustand zumindest im Wesentlichen parallel zu einer Fahrzeughochachse Z innerhalb des Kofferraums 9 und die Sitzelemente 3.2, 3.3 verlaufen ausgehend von einem unteren Ende des ausgeklappten Lehnenelements 3.1 zumindest bis zu einer Ladekante des Kofferraums 9 und zumindest im Wesentlichen senkrecht zur Fahrzeughochachse Z.

Im ausgeklappten Zustand kann somit das Fahrzeug 2, insbesondere eine geparkte Limousine, eine Entspannungsmöglichkeit in Form einer "parkbankähnlichen" Sitzgelegenheit unter dem schattenspendenden Kofferraumdeckel 12 anbieten, ohne dass der eigentliche Fahrzeuginnenraum zur Verfügung gestellt und geöffnet werden muss.

In einer möglichen Ausgestaltung des Fahrzeugs 2 ist dessen ausklappbare Sitzanordnung 3 mittels einer Vorrichtung 1 gemäß Figur 1 betreibbar.

## Patentansprüche

1. Vorrichtung (1) zum Betrieb einer aus oder in einem Fahrzeug (2) ausklappbaren Sitzanordnung (3) mit einer Steuereinheit (4), welche ausgebildet ist, einen Aktivierungsbefehl (B) von einem autorisierten Fahrzeugnutzer und dritten Personen zum Ausklappen der Sitzanordnung (3) aus einem fahrzeuginneren Bereich in einen von außerhalb des Fahrzeugs (2) zugänglichen Bereich zu empfangen und auszuführen,
**dadurch gekennzeichnet, dass** eine Freigabe einer Ausklappfunktion der Sitzanordnung (3) durch einen autorisierten Fahrzeugnutzer nur dann aktivierbar ist, wenn mittels einer Kamera (8) erfasst wird und/oder der autorisierte Fahrzeugnutzer bestätigt, dass ein Kofferraum (9), in welchem sich die Sitzanordnung (3) im eingeklappten Zustand befindet, frei von anderen Gegenständen ist.

2. Vorrichtung (1) nach Anspruch 1,
**gekennzeichnet durch**
- zumindest einen elektronischen Fahrzeugschlüssel (5), umfassend eine Funktion zur Freigabe einer Bedienung der Sitzanordnung (3) durch dritte Personen, und/oder
- zumindest ein mobiles Endgerät (6), umfassend ein Anwendungsprogramm zur Freigabe einer Bedienung der Sitzanordnung (3) durch dritte Personen.

3. Vorrichtung (1) nach Anspruch 1 oder 2,
**gekennzeichnet durch** zumindest ein mobiles Endgerät (7), umfassend ein Anwendungsprogramm zur Bedienung der Sitzanordnung (3) durch dritte Personen.

4. Verfahren zum Betrieb einer aus oder in einem Fahrzeug (2) ausklappbaren Sitzanordnung (3), wobei nach einer entsprechenden Freigabe von einem autorisierten Fahrzeugnutzer eine Ausklappfunktion der Sitzanordnung (3) aus einem fahrzeuginneren Bereich in einen von außerhalb des Fahrzeugs (2) zugänglichen Bereich für dritte Personen freigegeben wird,
**dadurch gekennzeichnet, dass** die Freigabe nur dann aktiviert wird oder aktivierbar ist, wenn mittels einer Kamera (8) erfasst wird und/oder der autorisierte Fahrzeugnutzer bestätigt, dass ein Kofferraum (9), in welchem sich die Sitzanordnung (3) im eingeklappten Zustand befindet, frei von anderen Gegenständen ist.

5. Verfahren nach Anspruch 4,
**dadurch gekennzeichnet, dass** mittels eines Anwendungsprogramms auf zumindest einem mobilen Endgerät (7) zumindest einer dritten Person Standorte von Fahrzeugen (2), welche über eine mittels des Anwendungsprogramms von dritten Personen bedienbare und betriebsbereite ausklappbare Sitzanordnung (3) umfassen, ausgegeben werden.

6. Verfahren nach Anspruch 4 oder 5,
**dadurch gekennzeichnet, dass** jede durch eine dritte Person durchgeführte Bedienung der Sitzanordnung (3) gemeinsam mit einer zugehörigen, zum Zeitpunkt der Bedienung vorliegenden geografischen Position des Fahrzeugs (2) in einer zentralen Speichereinheit (10) gespeichert wird.

7. Verfahren nach einem der Ansprüche 4 bis 6,
**dadurch gekennzeichnet, dass** bei einer Entfernung der dritten Person aus einem vorgegebenen Umkreis um das Fahrzeug (2) ohne vorheriges Einklappen der Sitzanordnung (3) mittels des Anwendungsprogramms ein Alarm auf dem mobilen Endgerät (7) der dritten Person ausgegeben wird und bei einer ausbleibenden Reaktion der dritten Person die Sitzanordnung (3) automatisch eingeklappt wird.

8. Fahrzeug (2) mit einer ausklappbaren Sitzanordnung (3) und einer Vorrichtung (1) zum Betrieb dieser nach einem der Ansprüche 1 bis 3.

9. Fahrzeug (2) nach Anspruch 8,
**dadurch gekennzeichnet, dass**
- die Sitzanordnung aus oder in einem Kofferraum (9) ausklappbar ist,
- die Sitzanordnung (3) zumindest ein Lehnenelement (3.1) und zumindest ein an dem Lehnenelement (3.1) angeordnetes Sitzelement (3.2, 3.3) umfasst,
- das zumindest eine Lehnenelement (3.1) in einem eingeklappten Zustand der Sitzanordnung (3) zumindest im Wesentlichen parallel zu und unterhalb einer den Kofferraum (9) an einer Oberseite begrenzenden Innenwand verläuft,
- das zumindest eine Sitzelement (3.2, 3.3) im eingeklappten Zustand der Sitzanordnung (3) zumindest im Wesentlichen parallel zu einer den Kofferraum (9) zu einer Fahrgastzelle abgrenzenden Innenwand verläuft und
- das zumindest eine Lehnenelement (3.1) und das zumindest eine Sitzelement (3.2, 3.3) aus dem eingeklappten Zustand in einen ausgeklappten Zustand schwenkbar sind,
- das zumindest eine Lehnenelement (3.1) in dem ausgeklappten Zustand zumindest im Wesentlichen parallel zu einer Fahrzeughochachse (Z) innerhalb des Kofferraums (9) verläuft und
- das zumindest eine Sitzelement (3.2, 3.3) im ausgeklappten Zustand ausgehend von einem unteren Ende des ausgeklappten Lehnenelements (3.1) zumindest bis zu einer Ladekante des Kofferraums (9) zumindest im Wesentlichen senkrecht zur Fahrzeughochachse (9) verläuft.

## Claims

1. Device (1) for operating a seat arrangement (3) which can be folded out from or into a vehicle (2), comprising a control unit (4) which is designed to receive and carry out an activation command (B) from an authorized vehicle user and third persons for folding out the seat arrangement (3) from an interior region of the vehicle into a region accessible from the outside of the vehicle (2),
**characterized in that** permission for a folding-out function of the seat arrangement (3) can only be activated by an authorized vehicle user if it is detected by means of a camera (8) and/or the authorized vehicle user confirms that a trunk (9) in which the seat arrangement (3) is located in the folded-in state is free from other objects.

2. Device (1) according to claim 1,
**characterized by**
- at least one electronic vehicle key (5) comprising a function for permitting an operation of the seat arrangement (3) by third persons, and/or
- at least one mobile terminal (6) comprising an application program for permitting an operation of the seat arrangement (3) by third persons.

3. Device (1) according to either claim 1 or claim 2,
**characterized by** at least one mobile terminal (7) comprising an application program for operating the seat arrangement (3) by third persons.

4. Method for operating a seat arrangement (3) which can be folded out from or into a vehicle (2), a folding-out function of the seat arrangement (3) from an interior region of the vehicle into a region accessible from the outside the vehicle (2) being permitted for third persons after being correspondingly permitted by an authorized vehicle user,
**characterized in that** permission is or can be activated only if it is detected by means of a camera (8) and/or the authorized vehicle user confirms that a trunk (9) in which the seat arrangement (3) is located in the folded-in state is free from other objects.

5. Method according to claim 4,
**characterized in that** locations of vehicles (2) comprising a seat arrangement (3) that is operable and ready for operation by third persons by means of the application program are output by means of an application program on at least one mobile terminal (7) of at least one third person.

6. Method according to either claim 4 or claim 5,
**characterized in that** each operation of the seat arrangement (3) carried out by a third person is stored, together with an associated geographical position of the vehicle (2) at the time of operation, in a central storage unit (10).

7. Method according to any of claims 4 to 6,
**characterized in that** when the third person leaves a predetermined radius around the vehicle (2) without prior folding-in of the seat arrangement (3), an alarm is output on the mobile terminal (7) of the third person by means of the application program, and the seat arrangement (3) is automatically folded in if the third person does not react.

8. Vehicle (2) having a seat arrangement (3) which can be folded out, and a device (1) for operating said seat arrangement according to any of claims 1 to 3.

9. Vehicle (2) according to claim 8,
**characterized in that**
- the seat arrangement can be folded out from or into a trunk (9),
- the seat arrangement (3) comprises at least one backrest element (3.1) and at least one seat element (3.2, 3.3) arranged on the backrest element (3.1),
- the at least one backrest element (3.1) extends, in a folded-in state of the seat arrangement (3), at least substantially in parallel with and below an inner wall delimiting the trunk (9) on an upper side,
- the at least one seat element (3.2, 3.3) extends, in the folded-in state of the seat arrangement (3), at least substantially in parallel with an inner wall delimiting the trunk (9) from a passenger compartment, and
- the at least one backrest element (3.1) and the at least one seat element (3.2, 3.3) can be pivoted from the folded-in state into a folded-out state,
- the at least one backrest element (3.1) extends, in the folded-out state, at least substantially in parallel with a vehicle vertical axis (Z) within the trunk (9) and
- the at least one seat element (3.2, 3.3) extends, in the folded-out state, starting from a lower end of the folded-out backrest element (3.1), at least substantially perpendicularly to the vehicle vertical axis (9), at least as far as a loading edge of the trunk (9).

## Revendications

1. Dispositif (1) permettant le fonctionnement d'un agencement de siège (3) dépliable hors de ou pliable dans un véhicule (2), comportant une unité de commande (4) qui est réalisée pour recevoir et exécuter une instruction d'activation (B) provenant d'un utilisateur autorisé du véhicule et de tierces personnes pour déplier l'agencement de siège (3) hors d'une zone à l'intérieur du véhicule dans une zone accessible depuis l'extérieur du véhicule (2),
**caractérisé en ce qu'**une libération d'une fonction de dépliage de l'agencement de siège (3) par un utilisateur autorisé du véhicule n'est activable que lorsqu'une caméra (8) détecte et/ou que l'utilisateur autorisé du véhicule confirme qu'un coffre (9), dans lequel l'agencement de siège (3) se trouve sous forme repliée, est exempt d'autres objets.

2. Dispositif (1) selon la revendication 1,
**caractérisé par**
- au moins une clé (5) électronique de véhicule, comprenant une fonction destinée à libérer une utilisation du l'agencement de siège (3) par des tierces personnes et/ou
- au moins un terminal mobile (6) comprenant un programme d'application destiné à libérer une utilisation du l'agencement de siège (3) par des tierces personnes.

3. Dispositif (1) selon la revendication 1 ou 2,
**caractérisé par** au moins un terminal mobile (7), comprenant un programme d'application pour l'utilisation de l'agencement de siège (3) par des tierces personnes.

4. Procédé permettant le fonctionnement d'un agencement de siège (3) dépliable hors de ou pliable dans un véhicule (2), dans lequel, après une libération correspondante par un utilisateur autorisé du véhicule, une fonction de dépliage de l'agencement de siège (3) hors d'une zone à l'intérieur du véhicule dans une zone accessible depuis l'extérieur du véhicule (2) est libérée pour des tierces personnes,
**caractérisé en ce que** la libération n'est activée ou activable que lorsqu'une caméra (8) détecte et/ou que l'utilisateur autorisé du véhicule confirme qu'un coffre (9), dans lequel l'agencement de siège (3) se trouve sous forme repliée, est exempt d'autres objets.

5. Procédé selon la revendication 4,
**caractérisé en ce qu'à** l'aide d'un programme d'application sur au moins un terminal mobile (7), des emplacements de véhicules (2), qui comprennent un agencement de siège (3) dépliable utilisable à l'aide du programme d'application par de tierces personnes et prêt à l'emploi, sont délivrés à au moins une tierce personne.

6. Procédé selon la revendication 4 ou 5,
**caractérisé en ce que** chaque utilisation de l'agencement de siège (3) effectuée par une tierce personne est enregistrée, conjointement avec une position géographique associée dans laquelle le véhicule (2) se trouve au moment de l'utilisation, dans une unité de stockage (10) centrale.

7. Procédé selon l'une des revendications 4 à 6,
**caractérisé en ce que** lors de l'éloignement de la tierce personne au-delà d'une périphérie spécifiée autour du véhicule (2) sans repliage préalable de l'agencement de siège (3) à l'aide du programme d'application, une alarme est émise sur le terminal mobile (7) de la tierce personne et, en l'absence d'une réaction de la tierce personne, l'agencement de siège (3) est replié automatiquement.

8. Véhicule (2) comportant un agencement de siège (3) dépliable et un dispositif (1) permettant le fonctionnement de celui-ci selon l'une des revendications 1 à 3.

9. Véhicule (2) selon la revendication 8,
**caractérisé en ce que**
- l'agencement de siège peut être déplié hors de ou plié dans un coffre (9),
- l'agencement de siège (3) comprend au moins un élément de dossier (3.1) et au moins un élément de siège (3.2, 3.3) disposé au niveau de l'élément de dossier (3.1),
- l'au moins un élément de dossier (3.1) s'étend, dans un état replié de l'agencement de siège (3), au moins de manière sensiblement parallèle à et sous une paroi interne délimitant le coffre (9) au niveau d'une face supérieure,
- l'au moins un élément de siège (3.2, 3.3) s'étend, dans un état replié de l'agencement de siège (3), au moins de manière sensiblement parallèle à une paroi interne délimitant le coffre (9) par rapport à un habitacle et
- l'au moins un élément de dossier (3.1) et l'au moins un élément de siège (3.2, 3.3) peuvent être pivotés à partir de l'état replié dans un état déplié,
- l'au moins un élément de dossier (3.1) s'étend, dans l'état déplié, au moins de manière sensiblement parallèle à un axe vertical (Z) du véhicule à l'intérieur du coffre (9) et
- l'au moins un élément de siège (3.2, 3.3) s'étend, dans l'état déplié, partant d'une extrémité inférieure de l'élément de dossier (3.1) déplié au moins jusqu'à un bord de chargement du coffre (9) au moins de manière sensiblement perpendiculaire à l'axe vertical (9) du véhicule.
